# EUROPÄISCHE PATENTSCHRIFT

(11) **EP 3 586 034 B1**
(45) Veröffentlichungstag und Bekanntmachung des Hinweises auf die Patenterteilung: **06.12.2023**
(21) Anmeldenummer: 18705919.1
(22) Anmeldetag: 16.02.2018
(51) Int. Cl.: F16F 13/10, F16F 13/26

(54) **HYDROLAGER ZUR LAGERUNG EINES AGGREGATS EINES KRAFTFAHRZEUGS**
HYDRAULIC MOUNT FOR STORAGE OF A VEHICLE MODULE
SUPPORT HYDRAULIQUE POUR INSTALLATION D'UN MODULE D'UN VÉHICULE

(30) Priorität: 22.02.2017 DE 102017103603
(43) Veröffentlichungstag der Anmeldung: 01.01.2020
(73) Patentinhaber: Vibracoustic SE, 64293 Darmstadt (DE)
(72) Erfinder: LÜNEBACH, Mark, 70469 Stuttgart (DE); HOLZ, Roland, 64658 Fürth (DE)
(74) Vertreter: Patentanwälte Olbricht Buchhold Keulertz
(86) Internationale Anmeldenummer: PCT/EP2018/053936
(87) Internationale Veröffentlichungsnummer: WO 2018/153794

(56) Entgegenhaltungen:
- EP-A1- 1 526 303
- EP-A2- 2 644 934
- WO-A1-2011/067007
- DE-A1-102009 044 773
- DE-A1-102010 060 885
- DE-A1-102012 006 282
- DE-A1-102014 224 244
- JP-A- 2005 127 519

## Beschreibung

Die Erfindung betrifft ein Hydrolager zur Lagerung eines Aggregats eines Kraftfahrzeugs gemäß dem Oberbegriff des Patentanspruchs 1.

Hydrolager zur Lagerung eines Aggregats eines Kraftfahrzeugs sind bekannt. Die Hydrolager dienen der Lagerung des Aggregates, bspw. eines Verbrennungsmotors, an einem Karosserieträger des Kraftfahrzeugs. Die Hydrolager sind üblicherweise als hydraulische elastische Lager ausgebildet. Im Betrieb des Kraftfahrzeugs werden Schwingungen aufgrund von sich rotatorisch und/oder translatorisch bewegender Bauteilen des Aggregates erzeugt. Diese Schwingungen gilt es bei einer Befestigung des Aggregates am Karosserieträger zur Geräuschreduzierung zu dämpfen, bevorzugt zu eliminieren. Dazu werden zwischen dem Karosserieträger und dem Aggregat Hydrolager angeordnet.

Neben dem möglichen Geräusch des Hydrolagers gilt es bei der Entwicklung von Hydrolagern eine mögliche Kavitation zu berücksichtigen, die aufgrund eines zwischen zwei Kammern des Hydrolagers wechselnden Hydraulikfluidaustausches in Erscheinung treten kann. In Abhängigkeit von am Hydrolager angreifenden Schwingungen können Blasen im Hydraulikfluid erzeugt werden, die neben einem knallartigen Geräusch beim Zerplatzen auch eine Schädigung des Hydrolagers herbeiführen können. Die beiden Kammern sind im Wesentlichen mit Hilfe einer Membran voneinander getrennt ausgebildet, wobei ein Austausch des Hydraulikfluids über einen die beiden Kammern verbindenden Dämpfungskanal erfolgt.

Der Offenlegungsschrift DE 11 2013 002 243 T5 ist ein Hydrolager zur Lagerung eines Aggregats eines Kraftfahrzeugs entnehmbar, welches ein Überdruckventil aufweist. Das Überdruckventil ist in die Membran integriert ausgestaltet.

Aus der Patentschrift DE 10 2010 045 277 B4 geht ein Hydrolager zur Lagerung eines Aggregats eines Kraftfahrzeugs hervor, dessen Membran wellenförmig ausgebildet ist und Entlastungsschlitze aufweist, die bei übergroßen Druckdifferenzen zwischen den Kammern wirksam werden.

Der Patentschrift EP 2 180 207 B1 kann ein Hydrolager zur Lagerung eines Aggregats eines Kraftfahrzeugs entnommen werden, das einen die Arbeitskammer mit einer Ausgleichskammer verbindenden Dämpfungskanal sowie einen die Kammern mit Zwischenkammern verbindbaren Überströmkanal aufweist, wobei entweder der Dämpfungskanal und der Überströmkanal oder nur der Überströmkanal zur Dämpfung geöffnet ist.

Die Offenlegungsschrift JP 2003148548 A1 offenbart ein Hydrolager zur Lagerung eines Aggregats eines Kraftfahrzeugs, wobei ein Kurzschlussventil geöffnet wird, sofern ein Unterdruck in der Arbeitskammer größer ist als ein voreingestellter Unterdruck in der Arbeitskammer.

Den Druckschriften DE 35 01 628 C3, DE 36 32 670 C2 und DE 42 18 110 A1 können Hydrolager zur Lagerung eines Aggregats eines Kraftfahrzeugs entnommen werden, die parallel zum Dämpfungskanal einen Bypass aufweisen, derart, dass bei einer Belastung der Membran in den Kammern bei gleichem Druck ein unterschiedlicher Druckabbau möglich ist.

DE 10 2012 006 282 A1 offenbart ein Hydrolager mit den Merkmalen des Oberbegriffs. Das Hydrolager weist ein Traglager, ein Auflager, einen Arbeitsraum, einen Ausgleichsraum und eine Trennwand mit einem Dämpfungskanal auf. Dabei kann ein Flüssigkeitsaustausch von Dämpfungsflüssigkeit aus dem Arbeitsraum in den Ausgleichsraum und wieder zurück durch eine Durchbrechung hindurch zur Tilgung von Leerlaufschwingungen erfolgen. Aus DE 10 2014 224 244 A1 und DE 10 2010 060 885 A1 sind weitere Hydrolager mit den Merkmalen des Oberbegriffs bekannt.

Die Aufgabe der vorliegenden Erfindung ist es, ein verbessertes Hydrolager zur Lagerung eines Aggregats eines Kraftfahrzeugs bereitzustellen.

Die Aufgabe wird erfindungsgemäß durch ein Hydrolager zur Lagerung eines Aggregats eines Kraftfahrzeugs mit den Merkmalen des Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Ein erfindungsgemäßes Hydrolager zur Lagerung eines Aggregats eines Kraftfahrzeugs weist einen Traglagerabschnitt und einen Auflagerabschnitt auf. Im Traglagerabschnitt ist eine mit Hydraulikflüssigkeit befüllbare Arbeitskammer und im Auflagerabschnitt ist eine mit Hydraulikflüssigkeit befüllbare Ausgleichskammer ausgebildet, wobei zwischen dem Traglagerabschnitt und dem Auflagerabschnitt eine durchströmbare, die Arbeitskammer von der Ausgleichskammer abgrenzende Düsenscheibe angeordnet ist. In der Düsenscheibe ist ein Dämpfungskanal zur fluidischen Kommunikation der Arbeitskammer mit der Ausgleichskammer ausgebildet, wobei die beiden Kammern, der Dämpfungskanal und das Hydraulikfluid ein erstes Dämpfungssystem zur Dämpfung von Schwingungen mit insbesondere niedrigeren Frequenzen bilden. Das Hydrolager besitzt ein zweites Dämpfungssystem zur Dämpfung von Schwingungen mit höheren Frequenzen. Das zweite Dämpfungssystem weist eine Überströmverbindung zwischen der Ausgleichskammer und einem zur Tilgung von Leerlaufschwingungen ausgebildeten Tilgerkanal auf. Die Überströmverbindung ist derart an einer von einer Membran abgewandt ausgebildeten Scheibenfläche einer Klemmscheibe an einem Zapfen ausgebildet, dass sie nicht von einer beweglichen Membran der Ausgleichskammer verdeckt oder zumindest teilweise geschlossen werden kann. Das heißt mit anderen Worten, dass ein Überströmen von Hydraulikfluid aus der Ausgleichskammer in den Tilgerkanal realisiert ist. Der Vorteil ist die Herbeiführung einer breiteren Kennlinienspreizung. Das heißt mit anderen Worten, dass sich die Dämpfung über einen größeren Frequenzbereich erstreckt. Ein weiterer Vorteil ist eine einhergehende Reduzierung eines im Hydrolager ausgebildeten maximalen Druckes, wodurch eine Kavitationsneigung wesentlich reduziert ist. Das bedeutet, dass das erfindungsgemäße Hydrolager eine gesteigerte Lebensdauer aufweist im Vergleich zu einem Hydrolager des Standes der Technik. Das erfindungsgemäße Hydrolager erwirkt einen deutlicheren Fahrkomfort bei gleichzeitiger Geräuschreduzierung.

Zur Herbeiführung eines kostengünstigen Hydrolagers ist die Überströmverbindung in Form einer Entlastungsnut ausgeführt. Die Entlastungsnut kann bspw. durch ein kostengünstiges Fräsverfahren ausgebildet werden.

Die Überströmverbindung ist an einer von der Membran abgewandt ausgebildeten Scheibenfläche der Klemmscheibe ausgebildet. Der Vorteil dieser Ausgestaltung ist einerseits in der direkt der Ausgleichskammer zugewandten Orientierung der Überströmverbindung zu sehen und andererseits darin, dass sie durch die bewegliche Membran nicht bedeckt oder zumindest teilweise geschlossen werden kann. Somit ist ein Überströmen ohne eventuelle Beeinträchtigung einer Überströmmenge möglich.

Es haben sich insbesondere drei, in regelmäßigem Abstand zueinander ausgebildete Überströmverbindungen als besonders effektiv zur Erzielung der Geräuschreduzierung erwiesen.

In einer weiteren Ausgestaltung des erfindungsgemäßen Hydrolagers weist die Klemmscheibe zur Zentrierung der Deckscheibe und der Membran einen Zapfen auf.

Sofern der Zapfen hohlzylinderförmig und konzentrisch mit dem Tilgerkanal ausgebildet ist, ist die Überströmverbindung am Zapfen anzuordnen, wobei insbesondere bei der Ausbildung in Form einer Entlastungsnut eine direkte Verbindung der Entlastungsnut mit dem Tilgerkanal und der Ausgleichskammer hergestellt ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Es zeigen:
- Fig. 1: in einer Draufsicht eine Düsenscheibe eines Hydrolagers gemäß dem Stand der Technik,
- Fig. 2: in einer Draufsicht die Düsenscheibe eines erfindungsgemäßen Hydrolagers, und
- Fig. 3: in einem Schnitt das erfindungsgemäße Hydrolager.

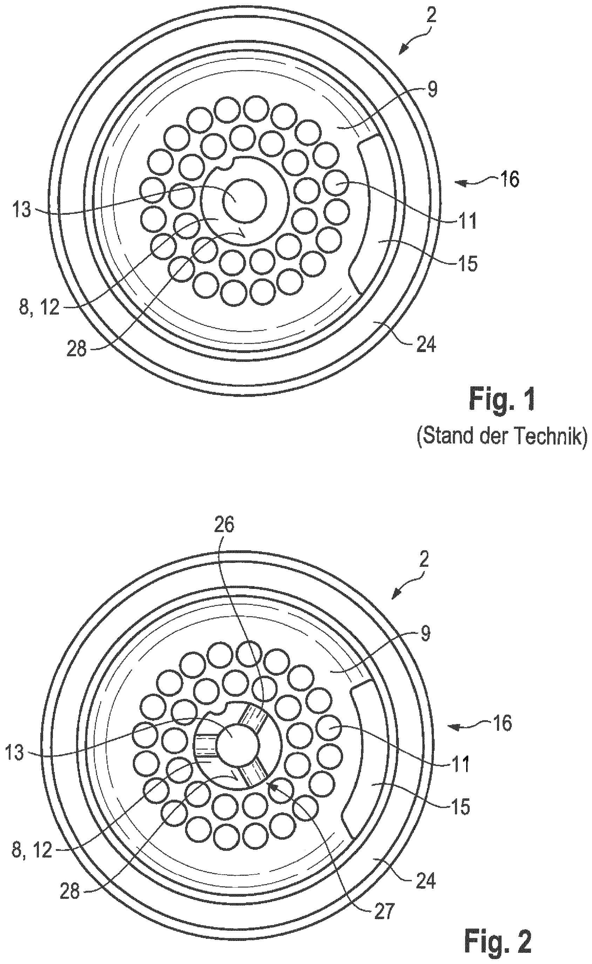

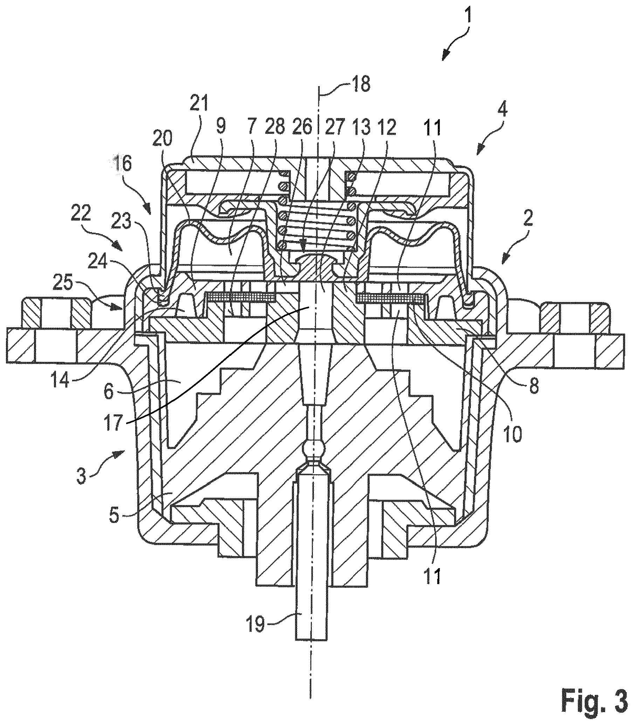

Ein gemäß dem Stand der Technik ausgebildetes Hydrolager 1 zur Lagerung eines nicht näher dargestellten Aggregats eines Kraftfahrzeugs weist eine in Fig. 1 dargestellte Düsenscheibe 2 des Hydrolagers 1 auf. In Fig. 2 ist die Düsenscheibe 2 des erfindungsgemäßen Hydrolagers 1 dargestellt. Das erfindungsgemäße Hydrolager 1 ist in einem Schnitt in Fig. 3 dargestellt.

Das Hydrolager 1 umfasst einen Traglagerabschnitt 3 und einen Auflagerabschnitt 4, die durch eine elastische Tragfeder 5, welche aus einem elastomeren Werkstoff ausgebildet ist, miteinander verbunden sind. Im Traglagerabschnitt 3 ist eine Arbeitskammer 6 ausgebildet, welche mit Hilfe der Düsenscheibe 2 von einer Ausgleichskammer 7 des Auflagerabschnitts 4 getrennt ausgebildet ist. Die beiden Kammern 6, 7 sind über die Düsenscheibe 2 miteinander durchströmbar verbunden.

Die Düsenscheibe 2 ist dreiteilig ausgebildet und weist eine Klemmscheibe 8, eine Deckscheibe 9 und eine zwischen der Klemmscheibe 8 und der Deckscheibe 9 angeordnete Membran 10 auf, welche schwingungsfähig in der Düsenscheibe 2 angeordnet ist.

Die Klemmscheibe 8 und die Deckscheibe 9 sind koaxial angeordnet und weisen sie vollständig durchdringende Kommunikationsöffnungen 11 auf, die deckungsgleich positioniert sind und mit Hilfe der Membran 10 voneinander getrennt sind. Die Klemmscheibe 8 weist zur radialen und axialen Positionierung der Deckscheibe 9 und der Membran 10 einen hohlzylindrischen Zapfen 12 mit einer Durchtrittsöffnung 13 auf.

Zwischen der Klemmscheibe 8 und der Deckscheibe 9 ist ein Dämpfungskanal 14 ausgebildet, welcher zur Überströmung von Hydraulikfluid aus der Arbeitskammer 6 in die Ausgleichskammer 7 und vice versa ausgestaltet ist. Der Dämpfungskanal 14 weist an seiner der Ausgleichskammer 7 zugewandten Seite eine Durchströmöffnung 15 auf, die in der Deckscheibe 9 ausgebildet ist. Eine nicht näher dargestellte weitere Durchströmöffnung ist in der Klemmscheibe 8 ausgestaltet und ist der Arbeitskammer 6 zugewandt ausgeführt. Über die Durchströmöffnung 15 kann Hydraulikfluid aus Ausgleichskammer 7 in den Dämpfungskanal 14 und von dort über die weitere Durchströmöffnung in die Arbeitskammer 6 und wieder zurück strömen. Somit liegt ein erstes Dämpfungssystem 16 vor, umfassend die Kammern 6, 7, den Dämpfungskanal 14 sowie das in den Kammern 6, 7 und im Dämpfungskanal 14 geführte Hydraulikfluid, welches zur Dämpfung von Schwingungen mit großen Amplituden und niedrigeren Frequenzen ausgebildet ist.

Zum Tilgen von Leerlaufschwingungen eines als Verbrennungsmotor ausgebildeten Aggregates ist ein Tilgerkanal 17 des Hydrolagers 1 vorgesehen, der konzentrisch zu einer Längsachse 18 des Hydrolagers 1 ausgebildet ist. Der Tilgerkanal 17 ist mit Hilfe eines im Tilgerkanal 17 aufgenommenen axial entlang der Längsachse 18 bewegbaren Stempels 19 zu Öffnen oder zu Schließen. Das Hydrolager 1 ist rotationssymmetrisch bezüglich der Längsachse 18 ausgestaltet.

Ein der Ausgleichskammer 7 zugeordneter Rollbalg 20 kann sich einer Belastung des Hydrolagers 1 entsprechend ausdehnen oder zusammenziehen. Der Rollbalg 20 dient zusätzlich einer Abdichtung zwischen der Düsenscheibe 2 und einem Deckel 21 des Auflagerabschnitts 4 und ist als Gummimembran ausgeführt. Hierzu weist er an seinem Außenumfang 22 einen Wulst 23 auf, welcher in einer Umfangsnut 24 der Düsenscheibe 2 aufgenommen ist. Die Umfangsnut 24 ist in einem Außenabschnitt 25 der Düsenscheibe 2 ausgebildet.

Der Deckel 21 ist die Düsenscheibe 2 und den Rollbalg 20 radial umfassend ausgebildet. Im Bereich der Umfangsnut 23 stützt sich der Deckel 21 in Richtung der Längsachse 18 des Hydrolagers 1 auf der Düsenscheibe 2 ab. Je nach Belastung des Hydrolagers 1 kann dabei ein Kontakt zwischen dem Deckel 21 und der Düsenscheibe 2 ausgebildet werden, wodurch ein metallisches Geräusch herbeigeführt werden kann. Des Weiteren kann ein metallisches Geräusch durch das Anschlagen der Membran 10 an die Klemmscheibe 8 und an die Deckscheibe 9 hervorgerufen werden.

Zur Reduzierung des metallischen Geräusches weist die Düsenscheibe 2 drei Entlastungsnuten 26 auf. Die Entlastungsnuten 26 sind an einer von der Membran 10 abgewandt ausgebildeten Scheibenfläche der Klemmscheibe 8 am Zapfen 12 ausgestaltet. Die Entlastungsnuten 26 verbinden den Tilgerkanal 17 mit der Ausgleichskammer 7, wodurch ein zweites Dämpfungssystem 27 ausgebildet ist, welches neben dem Hydraulikfluid die Ausgleichskammer 7, den Tilgerkanal 17 und die Entlastungsnuten 26 umfasst. Das zweite Dämpfungssystem 27 ist auf höhere Frequenzen, als sie von dem ersten Dämpfungssystem 16 erfasst werden, abgestimmt. Nicht zwingend notwendig sind drei Entlastungsnuten 26 auszubilden, wobei sich diese und ihre regelmäßige Anordnung mit jeweils einem Abstand von 120° zueinander als besonders wirkungsvoll erwiesen haben.

Die Entlastungsnuten 26 können vorteilhaft durch Fräsen eingebracht werden.

Mit Hilfe der Entlastungsnuten 26 ergibt sich im Vergleich zum Hydrolager 1 des Standes der Technik eine deutlich breitere Spreizung einer Kennlinie eines so genannten Verlustwinkels δ über der Frequenz f des erfindungsgemäßen Hydrolagers 1. Die beiden ausgebildeten Dämpfungssysteme 16, 27 ergeben eine deutlich breitbandigere Dämpfungscharakteristik als sie aus dem Stand der Technik bekannt ist.

## Patentansprüche

1. Hydrolager zur Lagerung eines Aggregats eines Kraftfahrzeugs, mit einem Traglagerabschnitt (3) und einem Auflagerabschnitt (4), wobei im Traglagerabschnitt (3) eine mit Hydraulikfluid befüllbare Arbeitskammer (6) und im Auflagerabschnitt (4) eine mit Hydraulikfluid befüllbare Ausgleichskammer (7) ausgebildet sind, wobei zwischen dem Traglagerabschnitt (3) und dem Auflagerabschnitt (4) eine durchströmbare, die Arbeitskammer (6) von der Ausgleichskammer (7) abgrenzende Düsenscheibe (2) angeordnet ist, wobei in der Düsenscheibe (2) ein Dämpfungskanal (14) zur fluidischen Kommunikation der Arbeitskammer (6) mit der Ausgleichskammer (7) ausgebildet ist, wobei die beiden Kammern (6, 7), der Dämpfungskanal (14) und das Hydraulikfluid ein erstes Dämpfungssystem (16) zur Dämpfung von Schwingungen mit insbesondere niedrigeren Frequenzen bilden, und wobei ein zweites Dämpfungssystem (27) zur Dämpfung von Schwingungen mit höheren Frequenzen ausgebildet ist, das eine Überströmverbindung (26) zwischen der Ausgleichskammer (7) und einem zur Tilgung von Leerlaufschwingungen ausgebildeten Tilgerkanal (17) aufweist, **dadurch gekennzeichnet, dass** die Überströmverbindung (26) derart an einer von einer Membran (10) abgewandt ausgebildeten Scheibenfläche einer Klemmscheibe (8) an einem Zapfen (12) ausgebildet ist, dass sie nicht von einer beweglichen Membran (20) der Ausgleichskammer (7) verdeckt oder zumindest teilweise geschlossen werden kann.

2. Hydrolager nach Anspruch 1, **dadurch gekennzeichnet, dass** die Überströmverbindung (26) in Form einer Entlastungsnut ausgeführt ist.

3. Hydrolager nach Anspruch 1 oder 2, **dadurch gekennzeichnet, dass** die Klemmscheibe (8) drei Überströmverbindungen (26) aufweist.

4. Hydrolager nach einem der vorhergehenden Ansprüche, **dadurch gekennzeichnet, dass**, sofern mindestens zwei Überströmverbindungen (26) ausgebildet sind, diese einen gleichmäßigen Abstand zueinander aufweisen.

5. Hydrolager nach einem der vorhergehenden Ansprüche, **dadurch gekennzeichnet, dass** die Klemmscheibe (8) zur Zentrierung der Deckscheibe (9) und der Membran (10) einen Zapfen (12) aufweist.

6. Hydrolager nach Anspruch 5, **dadurch gekennzeichnet, dass** der Zapfen (12) hohlzylinderförmig und konzentrisch mit einem Tilgerkanal (17) des zweiten Dämpfungssystems (27) ausgebildet ist.

## Claims

1. Hydraulic bearing for mounting a unit of a motor vehicle, having a supporting bearing section (3) and a bearing section (4), a working chamber (6) which can be filled with hydraulic fluid being formed in the supporting bearing section (3) and a compensating chamber (7) which can be filled with hydraulic fluid being formed in the bearing section (4), wherein a nozzle disc (2) through which a flow can pass and which separates the working chamber (6) from the compensating chamber (7) is arranged between the support bearing section (3) and the bearing section (4), wherein a damping channel (14) is formed in the nozzle disc (2) for fluidic communication of the working chamber (6) with the compensating chamber (7), wherein the two chambers (6, 7), the damping channel (14) and the hydraulic fluid form a first damping system (16) for damping vibrations with, in particular, lower frequencies, and a second damping system (27) being formed for damping vibrations with higher frequencies, which has an overflow connection (26) between the compensating chamber (7) and an absorber channel (17) formed for absorbing idling vibrations **characterized in that** the overflow connection (26) is formed on a disk surface of a clamping disk (8) facing away from a diaphragm (10) on a pin (12) in such a way that it cannot be covered or at least partially closed by a movable diaphragm (20) of the equalizing chamber (7).

2. Hydraulic bearing according to claim 1, **characterized in that** the overflow connection (26) is designed in the form of a relief groove.

3. Hydraulic bearing according to claim 1 or 2, **characterized in that** the clamping disk (8) has three overflow connections (26).

4. Hydraulic bearing according to one of the preceding claims, **characterized in that,** insofar as at least two overflow connections (26) are formed, these have a uniform spacing from one another.

5. Hydraulic bearing according to one of the preceding claims, **characterized in that** the clamping disk (8) has a pin (12) for centering the cover disk (9) and the diaphragm (10).

6. Hydraulic bearing according to claim 5, **characterized in that** the journal (12) is hollow cylindrical and concentric with an absorber channel (17) of the second damping system (27).

## Revendications

1. Support hydraulique pour le montage d'un groupe d'un véhicule automobile, comprenant une section de support (3) et une section d'appui (4), une chambre de travail (6) pouvant être remplie de fluide hydraulique étant formée dans la section de support (3) et une chambre de compensation (7) pouvant être remplie de fluide hydraulique étant formée dans la section d'appui (4), un disque à buses (2) pouvant être traversé par le fluide et délimitant la chambre de travail (6) de la chambre de compensation (7) étant disposé entre la section de support (3) et la section d'appui (4), un canal d'amortissement (14) étant formé dans le disque à buses (2) pour la communication fluidique de la chambre de travail (6) avec la chambre de compensation (7), les deux chambres (6, 7), le canal d'amortissement (14) et le fluide hydraulique forment un premier système d'amortissement (16) pour amortir des oscillations ayant en particulier des fréquences plus basses, et dans lequel un deuxième système d'amortissement (27) est formé pour amortir des oscillations ayant des fréquences plus élevées, qui présente une liaison de débordement (26) entre la chambre de compensation (7) et un canal d'amortissement (17) formé pour amortir des oscillations de marche à vide, **caractérisé en ce que** la liaison de débordement (26) est réalisée sur une surface de disque d'un disque de serrage (8) sur un tourillon (12), réalisée à l'opposé d'une membrane (10), de telle sorte qu'elle ne peut pas être recouverte ou fermée au moins partiellement par une membrane mobile (20) de la chambre de compensation (7).

2. Support hydraulique selon la revendication 1, **caractérisé en ce que** la liaison de débordement (26) est réalisée sous la forme d'une rainure de décharge.

3. Support hydraulique selon la revendication 1 ou 2, **caractérisé en ce que** le disque de serrage (8) présente trois liaisons de débordement (26).

4. Support hydraulique selon l'une des revendications précédentes, **caractérisé en ce que,** dans la mesure où au moins deux liaisons de débordement (26) sont formées, celles-ci présentent un écart régulier entre elles.

5. Support hydraulique selon l'une des revendications précédentes, **caractérisé en ce que** le disque de serrage (8) présente un tourillon (12) pour le centrage de la rondelle de recouvrement (9) et de la membrane (10).

6. Support hydraulique selon la revendication 5, **caractérisé en ce que** le tourillon (12) a une forme de cylindre creux et est concentrique avec un canal d'amortissement (17) du deuxième système d'amortissement (27).
